# EUROPEAN PATENT APPLICATION

(11) **EP 4 461 443 A1**
(43) Date of publication of application: **13.11.2024**
(21) Application number: 23172076.4
(22) Date of filing: 08.05.2023
(51) Int. Cl.: B23B 25/02, B23B 29/12

(54) **TOOL HOLDING DEVICE FOR A TURNING APPLICATION AND LATHE COMPRISING SUCH A TOOL HOLDING DEVICE**

(71) Applicant: VibiCore AB, 187 67 Täby (SE)
(72) Inventor: LINDWALL, Mats, 187 67 TÄBY (SE); LIDHOLM, Svante, 184 51 ÖSTERSKÄR (SE)
(74) Representative: Groth & Co. KB

(57) **Abstract**

Tool holding device (1) for a turning machine, the tool holding device comprising a housing (2) and a first oscillation mechanism (5), the first oscillation mechanism (5) comprising: a tool holder (12) with an oscillator bearing (26) for holding a tool (28); an elastic element (4) between the tool holder (12) and the housing (2); a pulse spindle (10) mounted in the housing (2) and abutting the oscillator bearing (26) with a lateral surface (21), which is substantially cylindrical and interrupted by at least one irregularity (22). The at least one elastic element (4) is arranged for pushing the tool holder (12) towards the lateral surface (21) of the pulse spindle (10), so that a rotation of the pulse spindle (10) generates an oscillation in the tool holder (12) due to the irregularity (22) in the lateral surface (21) of the pulse spindle (10).

## Description

### Technical Field

The invention relates to the field of lathe machines and in particular to a tool holding device for a turning application in general or a lathe machine more specifically.

### Background of the Invention

When producing work pieces using a lathe or turning machine typically a blank is fixedly connected to a rotating spindle of the lathe. The material removal happens when a tool is driven into the rotating blank to generate a final workpiece that comprises a circumferential pattern or shape. Workpieces produced using lathes are widely used in machine manufacturing, tool manufacturing, the medical industry for implants, the vehicle industry and so on. The tool is mounted on a carriage that can be moved along the rotating spindle and therewith the rotating blank. Typically, a longitudinal direction defined by the rotating spindle of the lathe and therewith the rotating blank is parallel with a z-direction of a coordinate system. An x-direction of the coordinate system is therewith perpendicular to the longitudinal axis defined by the rotating spindle. The tool can be fed either in the z-direction or in the x-direction or a combination thereof to produce inclined, rounded or other circular symmetric shapes.

The blank is made of material that can be turned such as metal, wood, plastic, minerals, stone and so on. At least some of these materials such as metal and plastic can generate long swarf or chips that can pose a problem. Such long shavings or swarf/chips can disturb the turning process substantially. The long swarf or chips can disturb the actual turning by damaging the workpiece and/or the tool's cutting insert leading to damaged workpieces or tools and therewith quality issues and/or related maintenance downtime, since the tool needs to be replaced. Finally, such long swarf or chips are typically spiral-shaped and have the tendency to bulk up in bundles which can lead to problems with the distribution of cooling liquid, since in some cases cooling liquid is used, as the bundles or bulks may clog nozzles or the like through which nozzles the cooling liquid is directed towards the workpiece. Instead of clogging the nozzles the bulks or bundles may misguide the spray direction so that the cooling liquid does not reach the workpiece or tool. Other clogging may arise when the chips are bulking up in bundles.

Efforts have been made to provide vibrations or oscillations to break the swarf into smaller pieces and bits. However, in the prior art usually the entire carriage or cross slide that holds the tool post or turret must be moved back and forth to generate vibrations. The carriage is however comparably heavy, which poses limitations to generate vibrations and this leads to reduced machine efficiency and potential exposure to maintenance downtime. In addition, existing solutions for generating vibrations typically try to move a rather large mass, for example an entire carriage comprising the tool and frame along the x- or z-direction. This leads to inertia and limits the frequency and amplitude that can be generated, which in turn limits the cutting speed and therewith productivity.

### Summary of the Invention

An object of the present invention is to provide a tool holding device for a lathe or turning machine that improves efficiency and reduces chip size and in particular chip length, reduces maintenance downtime and that is reliable.

In view of the above-mentioned problems the inventors of the present invention have discovered that it is possible to use a mechanical solution for generating an oscillation using a pulse spindle comprising a lateral surface having at least one irregularity, at least one elastic element, thus a spring, hydraulic or pneumatic cylinder, an elastomer or any other suitable type of elastic element, and a tool holder being held in a movable but resilient way, preferably in a single or one direction, whereby the at least one elastic element is pressing the tool holder towards the lateral surface of the pulse spindle so that the irregularity is generating an oscillation in the tool holder when the pulse spindle is rotating. The inventors have further discovered that it is possible to generate amplitude adjustments in the oscillations when the irregularities are formed conically - or inclined shaped surface so the amplitude can be adjusted by displacement of the pulse spindle along its longitudinal axis. The adjustment may be made manually or automatically/controlled via a control system using a servomotor or the like. The inventors have further discovered that it is possible to combine two oscillation systems or mechanisms and thereby provide oscillations in the tool in two different directions. This means that the oscillation direction of the turning tool can be adjusted to any cutting direction of the turning tool, which means that many surface shapes with very smooth surfaces, such as inclined or spheric surfaces or a combination thereof, can be achieved.

Disclosed herein is a tool holding device for a turning machine. The tool holding device comprises a housing and a first oscillation mechanism. The first oscillation mechanism comprises:
- a tool holder for holding a tool, said tool holder comprising an oscillator bearing,
- at least one elastic element abutting the tool holder with one end and the housing with the other end,
- a motion link connected to the housing and the tool holder, the motion link being used to embed the tool holder in a movable manner, and
- a pulse spindle embedded in the housing,
the pulse spindle comprising a lateral surface, which is substantially cylindrical and interrupted by at least one irregularity. The at least one elastic element is arranged for pushing the tool holder towards the lateral surface of the pulse spindle, the oscillator bearing thereby abutting the lateral surface, so that a rotation of the pulse spindle generates an oscillation in the tool holder due to the irregularity in the lateral surface of the pulse spindle.

The above-described tool holding device for a turning machine can be used to effectively break long chips and long swarf into shorter and smaller pieces in a lathe.

Generally, the irregularity may be shaped so that the amplitude can be adjusted by displacing the pulse spindle in a longitudinal manner. Further, the lateral surface of the pulse spindle may comprise several irregularities on the lateral surface to generate a higher frequency of the oscillations or pulses. The irregularity or irregularities may be protruding from the lateral surface or they may be formed inwards from the lateral surface.

The motion link may comprise one or several devices designed to steer and control the oscillation direction. Such devices may be embodied as laminated springs or membranes. Other embodiments of the motion link may be designed as a linear guide. Such a linear guide may comprise a guide rail that is oriented parallel to the movement along which a body has to be moved and a sled or slider arranged moveably on the guide rail. The motion link may be made of a resilient and elastic material or it may at least be designed a mechanism that allows movement backwards and forward in at least one direction. The main purpose of the motion link is however to steer and control the oscillation direction and movement.

One solution that has proven itself to work well is one or several membrane(s) that connect from the housing or frame to the tool holder whereby a plane defined by the membrane(s) is oriented perpendicular to the oscillation movement direction. The movement of the oscillation or oscillation direction is thus oriented at least more or less parallel to a normal of the plane defined by the membrane(s). It is however clear that such a design could also be achieved with any of the above-mentioned motion link solutions and is therewith not limited to membrane(s).

The oscillator bearing may be a ball bearing.

In an embodiment the tool holder may be designed to hold and fixate the tool in various orientations so that a counter cutting force that is generated when the tool is fed in a feed direction due to a cutting force resulting from the blank, is absorbed by the pulse spindle.

The above may lead to an increased flexibility of the tool holding device.

In an embodiment the pulse spindle can be displaced along its longitudinal axis and whereby the at least one irregularity is a machined surface that is conically shaped or inclined shaped as seen along a longitudinal axis of the pulse spindle. This way a point of contact between the pulse spindle and the oscillator bearing can be chosen along the longitudinal axis and there with the amplitude of the oscillations can be varied and adjusted.

The ability to adjust the amplitude is beneficial when it comes to turning for the following reason. Typically, the tool is subject to an infeed, which is typically given in feed per turn thus for a example a z-movement of 0.5mm per turn of the rotating spindle of the lathe and thus the workpiece. This means that the tool is moving 0.5mm in the infeed direction during one turn of the workpiece and thus the rotating spindle of the lathe. Therewith the amplitude of one pulse needs to be at least 0.5mm preferably a bit more in order to break the (long) chip into shorter pieces. The frequency of the pulses and therewith the rotational speed of the pulse spindle affects the chip length, generally the higher the frequency the shorter the chips with a certain practical limit as the skilled person will understand. The disclosed embodiment therewith comes with a substantial advantage because the amplitude can be adjusted depending on the infeed.

In addition, the generated length of the chips can also be adjusted and controlled by changing the frequency. The frequency can be changed by providing more than one irregularity/inclined surface along the circumference of the lateral surface of the pulse spindle or by increasing the rotational speed of the pulse spindle. From the above it becomes further clear that the cutting speed in m/min or periphery distance per time on the workpiece affects the length of the chips or swarf. The faster the cutting speed the longer the chips.

The frequency of the pulses and the cutting speed affect the length of the chips, while the amplitude needs to be adjusted to the infeed to generate breaks in the chips. The herein presented tool holding device allows to adjust both the frequency of the pulses and the amplitude, independently of one another.

In an embodiment the the tool holder may be embedded in the housing by preferably two motion links and more preferably four motion links.

The above may increase stability and therewith accuracy. It may also increase robustness of the tool holding device.

The motion links may be membranes that are fixed to the housing and the tool holder. The membranes may be made of a resilient, durable material such as for example, steel or any other type of suitable material.

The membrane or the motion link may be pre-tensioned when it is in the neutral position.

As explained previously, the purpose of the membrane(s) is to direct the oscillation movements in a specific direction, along a normal of the plane defined by the membrane. In the other directions the membrane(s) keep the tool holder at least more or less fixed.

In another embodiment the pulse spindle may comprise two or more irregularities on the lateral surface and wherein the irregularities are preferably conically shaped or inclined surfaces, as seen in relation to the longitudinal direction of the pulse spindle.

This may lead to an increased frequency of the pulses and oscillations.

In still another embodiment a part of the lateral surface of the pulse spindle(s) may be free from any irregularity and is thus harmonic and cylindrical along its circumference, so that an oscillation with zero amplitude can be chosen.

The above is advantageous since often the last fine cut should be done with oscillation switched of or amplitude equal zero to produce a smooth surface.

In still another embodiment the tool holder may comprise a first part and a second part, the first part comprising the oscillator bearing and whereby the motion link(s) are connected to the first part and whereby the second part is a tool holding part being arranged to hold a tool and whereby the first part and the second part are pivotable or moveable in relation to one another.

Generally, the direction of the pulses or oscillations need to be aligned with the infeed direction of the tool. In other words, if the tool is supposed to reduce a diameter of the work piece over a certain length as measured in a z-direction and therewith a longitudinal direction of the rotating spindle of the lathe, then the oscillations or pulses need to be generated in the same z-direction otherwise the surface can become irregular. If the infeed direction is along the x-direction, for example to generate grooves or a combination thereof, the oscillations or pulses need to be generated in the same x-direction. Combinations of x-directions and z-directions may of course also be possible to generate, inclined, curved, convex or concave shapes on the workpiece and the direction of oscillations may be adapted accordingly, since the first part and the second part of the tool holder may be pivotable or moveable in relation to one another. This is explained later herein referring to a mechanism with two oscillation units.

The second part may comprise an adjusting mechanism for holding and adjusting the tool. The adjusting mechanism may be designed to fixedly hold a tool in position and thus the adjusting mechanism may further comprise screws and some sort of clamping elements so that a position of the tool on the tool holder may be adapted and changed.

In an embodiment the tool holding device may comprise a motor and the pulse spindle may be driven by the motor. The motor may be an electric motor, for example a servomotor or the like.

Using a separate motor for the pulse spindle may improve flexibility and adjustability of the tool holding device. The frequency of the pulses may be adjusted by changing motor speed for example.

A motor such as a servomotor or the like may also be used to adjust displacement of the pulse spindle along its longitudinal axis.

Alternatively, to the motor, the tool holding device may comprise a rotation transfer so that the pulse spindle can be driven of a rotation adapter of the turning machine. Even if a rotation adapter of the lathe or turning machine is used, there may still be a motor present to drive the longitudinal displacement of the pulse spindle.

In an embodiment the tool holding device may comprise more than one elastic element. This may help to adjust the elastic force used to generate the oscillations and pulses.

In still another embodiment, the tool holding device may comprise a second oscillation mechanism, the second oscillation mechanism comprising:
- a tool holder for holding a tool said tool holder comprising an oscillator bearing,
- at least one elastic element abutting the tool holder with one end and the housing with the other end,
- a motion link being connected to the housing and the tool holder, the motion link being used to embed the tool holder in a movable manner,
- a pulse spindle being embedded in the housing, the pulse spindle comprising a lateral surface, which is substantially cylindrical and interrupted by at least one irregularity.

The at least one elastic element is arranged for pushing the tool holder towards the lateral surface of the pulse spindle, the oscillator bearing thereby abuts the lateral surface, so that a rotation of the pulse spindle generates an oscillation in the tool holder due to the irregularity in the lateral surface of the pulse spindle, whereby the second oscillation mechanism is connected to the tool holder of the first oscillation mechanism so that a first vibration direction generated by the first oscillation mechanism is oriented at an angle to a second vibration direction generated by the second oscillation mechanism.

When using two vibration units or oscillation units or oscillation mechanisms, as explained in the previous paragraph, it is possible to oscillate the tool in two directions, with an angle in between two directions. The movements or vibrations of the two directions need to be synchronized and the resulting amplitude can be adjusted so that the resulting vibration or oscillation occurs in a feed direction of the tool. This enables the tool holding device to provide oscillations in the tool in various feed directions so that high quality surfaces can be provided on the blank or workpiece.

In an embodiment the tool holding device may comprise a support structure, whereby each oscillator bearing of the first oscillation mechanism and second oscillation mechanism is embedded in a separate casing that is part of a corresponding tool holder, whereby each casing is connected to the motion link of the first - and second oscillation mechanism, respectively. The support structure may be connected to the casing of the first oscillation mechanism and the second oscillation mechanism may be attached to the support structure.

The above embodiment may help to transfer the oscillations generated by the first oscillation mechanism to the second oscillation mechanism.

The support structure may be a support plate or the like for easy mounting of the second oscillation mechanism.

The elastic elements may be springs, cylinders, elastomers, pistons or any other suitable pre-tensioning device.

In an embodiment the longitudinal directions of the two pulse spindles may be oriented parallel to one another.

The above may simplify construction.

In an embodiment an angle between the first vibration direction and the second vibration direction may be chosen to be 90 degrees and thus perpendicular.

This may make calculating directions and amplitudes easier since one oscillation direction can be associated to sinus while the other of the oscillation direction may be associated to cosines.

By assembling two vibration units or two pulse spindles with different vibration directions such as 90° or perpendicular to one another, the resulting chip-breaking movement can follow the tool's direction of movement. Amplitude must be and can be adjusted for each direction, which is enabled with the presented tool holding device comprising two oscillation mechanisms or oscillation units.

In a further embodiment tool holding device may comprise a gearing, wherein the pulse spindles of the first oscillation mechanism and the second oscillation mechanism, respectively, may be interconnected with one another.

This may provide a synchronization between the pulse spindles.

It is further possible to implement motor control of the amplitude of the oscillation to make adjustments and adaptations in real time to follow any profile of the workpiece.

The breaking of the chips needs to happen along the cutting direction to generate smooth surfaces on the workpiece.

Further, herein the term feed direction or infeed direction relates to the movement of the carriage and thus a tool versus the work piece and thus it relates to a direction along which the cutting tool is moving.

A direction of a force generated by the at least one elastic element is acting in a same direction as a cutting force generated by the feed direction or infeed direction. This means in other words that the pulse spindle and its lateral surface is providing support when the tool holding device is used and moved in the infeed - or feed direction.

Disclosed herein is also a lathe comprising a tool holding device according to any of the above embodiments.

Further aspects and example embodiments are illustrated in the accompanying drawings and/or described in the following description.

### Brief Description of the Drawings

The present invention will now be described, for exemplary purposes, in more detail by way of embodiment(s) and with reference to the enclosed drawings, in which:
- Fig. 1: schematically illustrates a cross sectional side view of a lathe comprising a tool holding device according to the invention;
- Fig. 2: schematically illustrates a perspective view of a tool holding device according to the invention;
- Fig. 3: schematically illustrates a front view of the tool holding device according to figure 2;
- Fig. 4: schematically illustrates a similar view as figure 2 but with a part of the housing removed for illustrative purposes;
- Fig. 5: schematically illustrates a perspective view onto the tool holding device of figure 4 in a different configuration;
- Fig. 6: schematically illustrates another perspective view of a tool holding device according to the invention with a housing at least partially removed;
- Fig. 7: schematically illustrates an exploded view of the tool holding device according to the invention;
- Fig. 8a: schematically illustrates a view of another exemplary embodiment according to the invention; and
- Fig. 8b: schematically illustrates another view of the embodiment of figure 8a but with parts of the housing removed.

### Detailed Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive sense.

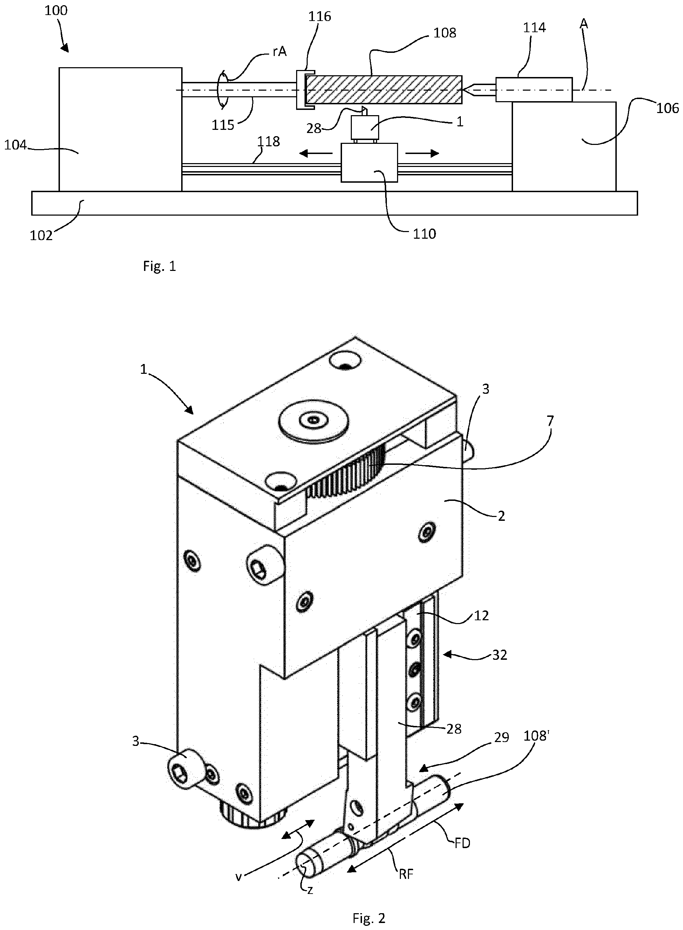

Figure 1 illustrates a cross sectional view of a lathe or turning machine 100. The turning machine 100 comprises a machine bed 102, a headstock 104 and a tail stock side 106 interconnected with one another via the machine bed 102. The headstock 104 comprises a rotation spindle 115 having a chuck 116 or the like for holding a blank 108. The rotation spindle 115 is fixedly connected to t the chuck 116. The headstock104 also comprises a motor (not shown in figure 1) for driving a rotation around a rotation spindle axis A of the lathe 100. The rotation rA is also indicated in figure 1. On the tail stock base 106 a tail stock 114 with a dead centre or a revolving centre is arranged in order to fixate a comparably long workpiece 108 or blank on the rotation spindle axis A. For short workpieces the dead centre or rotating adapter is not needed. The lathe further comprises a carriage 110, which can move along a z-direction, which carriage 110 typically comprises a cross slide designed to hold a tool, said cross slide configured for movement along a x-direction. The carriage 110 can be moved along a guide 118 and thus along the rotating spindle of the lathe or the like, which is the z-direction. The guide 118 may be a linear guide or the like for movement of the carriage 110. Figure 1 illustrates the general principle of a lathe 100 without any limiting effect on the invention. The carriage 110 comprises a tool holding device 1, which is slidable in the x-direction on the cross slide, said tool holding device 1 comprising a tool 28 used to cut into the blank in order to generate a work piece, for example a rod with specific diameters along its longitudinal extension. The herein disclosed invention concerns a tool holding device 1 for a lathe.

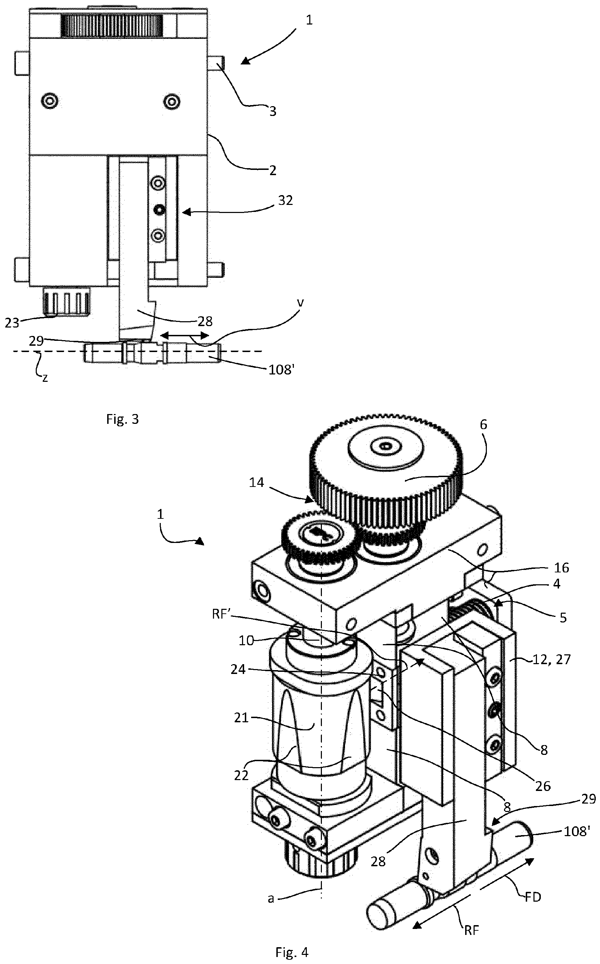

Figure 2 illustrates a tool holding device 1 for a turning machine or lathe 100, whereby the tool holding device 1 is separated from the lathe for illustrative purposes. The tool holding device 1 comprises a tool holder 12 for holding a tool 28. The tool holder 12 comprises a fixation mechanism 32 for removably mounting the tool 28 in the tool holder 12. The tool 28 itself comprising a cutting insert 29 that can be replaced. The cutting insert 29 is designed to be driven or pushed into a rotating workpiece 108' that is fixed to the rotating spindle of the lathe 100. In figure 2 the tool 28 is fed on the workpiece 108' along the z-direction, which z-direction corresponds to the rotation spindle axis A of figure 1. The arrow v indicates the oscillation direction, which will be explained in more detail referring to figure 4. As can be seen from figure 2, the oscillation direction corresponds to the infeed direction, which is the z-direction. The housing 2 is fixed to a frame 16 (c.f. figure 4) using screws and/or rivets. The housing 2 is further connected to the frame 16 for example by bolts or screws or the like. The housing 2 is further connected to the lathe using bolts 3 that extend through the housing 2 and the frame 16. The embodiment of the tool holding device 1 shown in figure 2 further comprises a cogwheel 7 configured to be connected to a cogwheel (not shown) of the lathe 100 for powering the drive spindle.

Figure 2 further illustrates a cutting force RF resulting from a feeding direction FD of the tool 28 and cutting insert 29 and a rotation of the workpiece. The cutting insert 29 is arranged so that it faces the feeding direction FD. The feeding direction FD in figure 2 illustrates how the tool holding device 1 is moving versus the workpiece or blank 108' during turning of the blank 108'. The cutting force RF is resulting from the feeding direction FD and therewith the engagement of the tool 28 with the blank 108'. In figure 2 the feed direction FD is parallel to the z-direction, which corresponds to a longitudinal direction of the blank 108'.

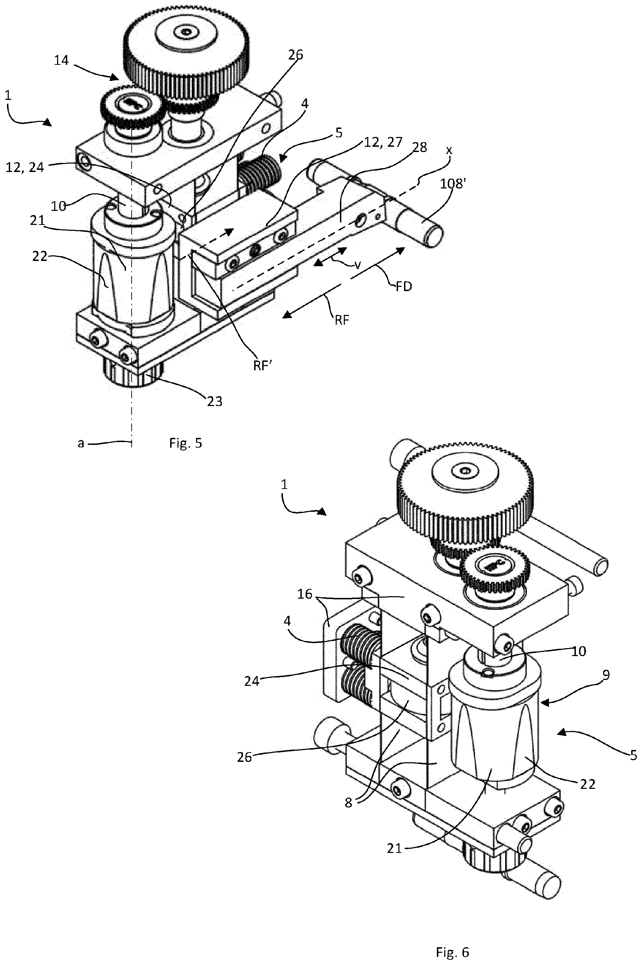

Still referring to the above, the tool holder 12 may be designed so that the tool 28 can be oriented according to the above also when the tool holder is rotated, for example with 90 degrees and thus in the x-feed direction, as shown in figure 5 or at any other angle. More detail regarding the feed direction FD and the cutting force RF will be explained referring to figure 4. The tool holder 12 may further be designed so that the tool 28 can be linearly moved, as illustrated.

Although not illustrated in the figures herein it is to be noted that all embodiments of the tool holding device 1 as illustrated herein may comprise a motor of any type instead of the cogwheel 7 for driving the pulse spindle 6.

Figure 3 illustrates a front view of the tool holding device 1 of figure 2. The tool 28 with the cutting insert 29 is well visible and so is the workpiece 108'. The tool holding device 1 further comprises a knob 23, which knob 23 is used to adjust and control an amplitude of the oscillations, as will be explained later herein. In figure 3 the arrow v indicating the oscillation direction v is further illustrated. Again, the infeed direction z is along the z-direction in order to provide a clean and smooth cut.

Turning now to figures 4, 5 and 6, which illustrate a tool holding device 1 according to the invention with the housing 2 removed, details of an oscillation mechanism 5 will herewith be explained. The oscillation mechanism 5 is illustrated as drawing rotational energy from a lathe 100 or the like via the drive shaft 6 that is passing on the rotational energy to a pulse spindle 10 via a gearing 14 or the like. The gearing 14, the pulse spindle 10 and the drive shaft 6 are embedded in the frame 16, which comprises plates with bearings for holding the drive- and pulse spindles 10, 6 and gearing 14.

Although the oscillation mechanism 5 is in the following explained referring to an embodiment using a cogwheel 7 to power the tool holding device 1, the skilled person understands that for example a servomotor or any other type of motor could be used to drive the oscillation mechanism 5. The tool holding device 1 may even comprise several motors to drive various features of the oscillation mechanism 5.

The pulse spindle 10 comprises a lateral surface 21, which is preferably greater in diameter than an axis of the pulse spindle 10. The lateral surface 21 comprises irregularities 22 in the figures illustrated as inclined or conical surfaces 22. The conical surfaces 22 are embedded in the lateral surface 21 and inclined as seen in relation to a longitudinal axis a defined by the pulse spindle 10. The tool holder 12 comprises an oscillator bearing 26 that is abutting the lateral surface 21 of the pulse spindle 10 in a manner that the oscillator bearing 26 can roll on the lateral surface 21 and the conical surfaces 22 when the pulse spindle 10 is rotating. In the embodiment shown in figures 4 to 6 the lateral surface 21 comprises four conical surfaces 22 around its circumference. It is however clear that the lateral surface 21 may comprise 1, 2, 3, 4, 5 or any suitable number of conical surfaces 21 arranged, preferably at regular intervals, on the lateral surface 21. The tool holder 12 is mounted in the frame 16 via motion links 8 that hold the tool holder 12 in a central position but in a moveable manner in a direction perpendicular to the longitudinal direction a of the pulse spindle 10. In the illustrated embodiment in figures 4 to 6, four motion links 8 hold the tool holder 12 in position. The motion links 8 are designed to always elastically draw or elastically move the tool holder 12 back into an idle position while at least one elastic element 4 is pre-tensioning or pushing the tool holder 12 towards the pulse spindle 10 so that the oscillator bearing 26 is abutting the lateral surface 21. The oscillator bearing 26 is housed in a first part 24 of the tool holder 12. The tool 28 is mounted in a second part 27 of the tool holder 12, while the fixation mechanism 32 (c.f. figure 2) is also part of the second part 27 of the tool holder 12. The at least one elastic element 4 is engaging the tool holder 12 on an opposite side of the oscillator bearing 26 and the at least one elastic element 4 is abutting the housing 2 or the frame 16 with one end and the tool holder 12, preferably the first part 24, with another end. In the illustrated embodiment of figure 4, five elastic elements 4 are illustrated in the tool holding device 1. Any number such as two, three, four or five elastic elements 4 may of course be used depending on their strength and the elastic force needed to ensure clean and distinct oscillation. Further, the elastic elements 4 in the figures are illustrated as springs but they may also be elastomers, cylinders, hydraulic cushions air springs and so on. One can understand now from figure 4 that a rotation of the pulse spindle 10 will generate a vibration or oscillation in the tool holder 12 due to the elastic force generated by the elastic elements 4 and the irregular surface of the lateral surface 21 of the pulse spindle 10 in the exemplary embodiment shown as conical - or inclined surfaces 22 machined into the lateral surface 21. It can further be understood that an amplitude of the oscillations or vibrations can be adjusted by displacing the pulse spindle 10 along its longitudinal axis a, so that a displacement along the longitudinal axis a of the pulse spindle 10 or the lateral surface 21, away from the gearing 14 towards the knob 23 will result in a lower amplitude and while a displacement towards the gearing 14 away from the knob 23 will result in a higher amplitude of the pulses and oscillations.

Referring specifically to figure 4, the details relating to the feed direction FD and the resulting cutting force RF are herewith explained. The feed direction FD relates to the movement direction of the tool holding device 1 during turning, as previously explained. The resulting force generated between the blank 108 and the cutting insert 29 and the tool 28, respectively, is the cutting force RF, which needs to be absorbed in the tool holding device 1. In order to provide a smooth and good quality turning surface on the blank 108' this cutting force RF needs to be absorbed by the pulse spindle 10 and the lateral surface 21, respectively, via a counter cutting force RF', which is indicated in a dashed line in figure 4. If this counter cutting force RF' is absorbed by the elastic elements 4, then the quality of the turning surface on the blank 108' may be reduced, since the elastic elements 4 may not be capable to absorb such a counter force without being deformed.

Therefore, the spring force or elastic force of the elastic elements 4 may be adapted so that it is larger than the reaction force RF to avoid such deformation. The same applies if the tool 28 is turned 90 degrees around the x-axis and 90 degrees around the y-axis for turning in a radial direction of the blank 108' as illustrated in figure 5.

Figure 5 illustrates another orientation of the tool 28 in which the tool holding device 1 is configured to turn in a radial direction of the blank 108'. Again, the feed direction FD and the cutting force RF are indicated and it is visible that the pulse spindle 10 is absorbing the cutting force RF with a counter cutting force RF' also in such a case. The cutting insert is not visible in figure 5. The feed direction FD in figure 5 is parallel with the x-direction, which is basically a radial direction as seen from the blank 108'.

From figures 4 and 5 it becomes clear that the cutting insert 29 and the tool 28, respectively, need to be oriented so that the counter cutting force RF' is absorbed or generated by the pulse spindle 10 in order to ensure a high quality finish on the blank, independently of the feed direction FD. As mentioned previously the tool holder 12 may be designed so that the tool's 28 orientation can be changed for absorbing a counter cutting force RF' by the pulse spindle 10.

Although not in detail visible from the figures it is to be noted that the lateral surface 21 may be designed so that a part of it, as seen in a circumferential direction of the pulse spindle 10, does not comprise or is free from any conical- or inclined surface 22, which means that the amplitude of the pulses or oscillations can be null or zero and that there with no oscillation is present at least in one position along the longitudinal axis of the pulse spindle 10. This makes it possible to switch off oscillation where and when needed.

Then knob 23 may be used to adjust the displacement of the pulse spindle 10 along its longitudinal axis a. However, and as a skilled person will understand, it is possible that the displacement may be done automatically using a motor or servomotor.

The second part 27 of the tool holder 12 extends on one side of the first part 24 in a manner so that the tool 28 can easily be extended and brought into engagement with a blank or workpiece 108'. In a preferred embodiment and as explained referring to figure 5, the second part 27 can be pivoted in relation to the first part 24 of the tool holder 12. The pivoting movement may be done using a motor or manually using screw fixations and the like (not visible in figures). Again, also the pivoting may be performed in an automatic manner using a servomotor and an interface or the like.

In figure 5 the vibration direction v is indicated, which is in this case adjusted for a x-feed direction x of the tool 28. Again, the oscillation direction v is chosen to be parallel with the infeed direction x in order to generate a smooth cut, for example when a groove or the like needs to be cut into the workpiece 108'. It is to be noted that for an infeed preferably the entire tool holding device 1 is moved along the infeed direction. Another embodiment (not shown) may however also encompass a movement of the tool holder 12 along the infeed direction. The oscillation mechanism 5 according to the disclosure herein, does not prevent such a solution.

Turning now to figure 6 further details of the oscillation mechanism 5 are herewith explained in more detail as they are optimally visible and therewith understandable from figure 6. The oscillation bearing 26 embedded in the first part 24 of the tool holder 12 is well visible. The oscillation bearing 26 is embodied in the form of a roller that is mounted in the first part 24 for example via bearing. The oscillator bearing 26 may be made of an appropriate material so that it can follow the lateral surface 21 of the pulse spindle 10 in a snug manner. The elastic elements 4 abut the frame 16 or removable spring bracket mounted in the housing 2 with one end and the first part 24, which is a bearing bracket of the tool holder 12 and the tool holder 12 is movably embedded or mounted in the frame 16 via the motion links 8.

The motion links 8 are shown in the form of membranes, for example made of metal or any other suitable material in all embodiments disclosed herein. Alternatively, the motion links (not shown) may be formed as springs, elastomers, air dampers, cylinders or any other suitable solution in any of the embodiments shown herein.

Further, and also according to any embodiment herein, the pulse spindle 10 may comprise a cylindrical part 9 comprising the lateral surface 21 and the inclined surface 22 or irregularities 22, as indicated in figure 6, whereby the cylindrical part 9 can be replaced with another cylindrical part for example comprising inclined surfaces or other irregularities that are different from the ones shown in the embodiments herein in order to vary frequency or amplitude and/or a motion curve. The skilled person will understand this concept based on the above hint.

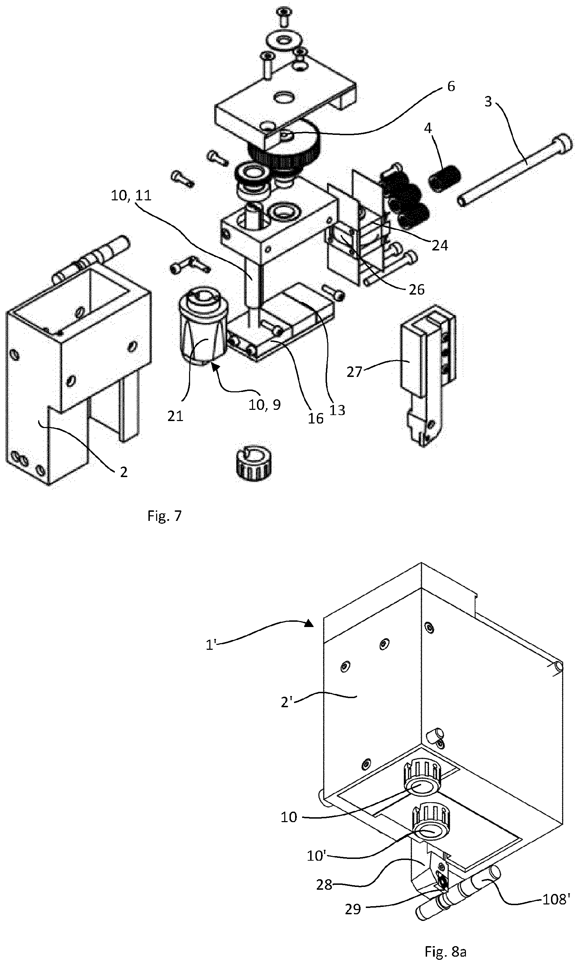

Figure 7 illustrates an exploded view of the tool holding device according to the invention. The housing 2 is illustrated separated and it can be well seen from figure 7 how the cylindrical part 9 comprising the lateral surface 21 is separated from an axis11 of the pulse spindle 10. The cylindrical part 9 is fixed to the central part 11 via screws so that it can be replaced. The motion links 8 in the form of membranes are clamped or arranged in slots 13 of the frame 16. Screws and bolts 3 are used to mount the housing 2 to the lathe. From figure 7 it also becomes clear that the elastic elements 4 abut the first part 24 of the tool holder 12 with end and that they can abut the housing 2 with their other ends depending on the chosen solution. The drive shaft 6 and the pulse spindle 10 are rotatably mounted in bearings or the like in the frame 16.

In the embodiments illustrated in the figures the tool holding device 1 is shown with one oscillation mechanism 5. It is however possible to install two oscillation mechanisms in a tool holding device, for example oriented so that they can provide oscillation directions that are oriented at angle or perpendicular to one another.

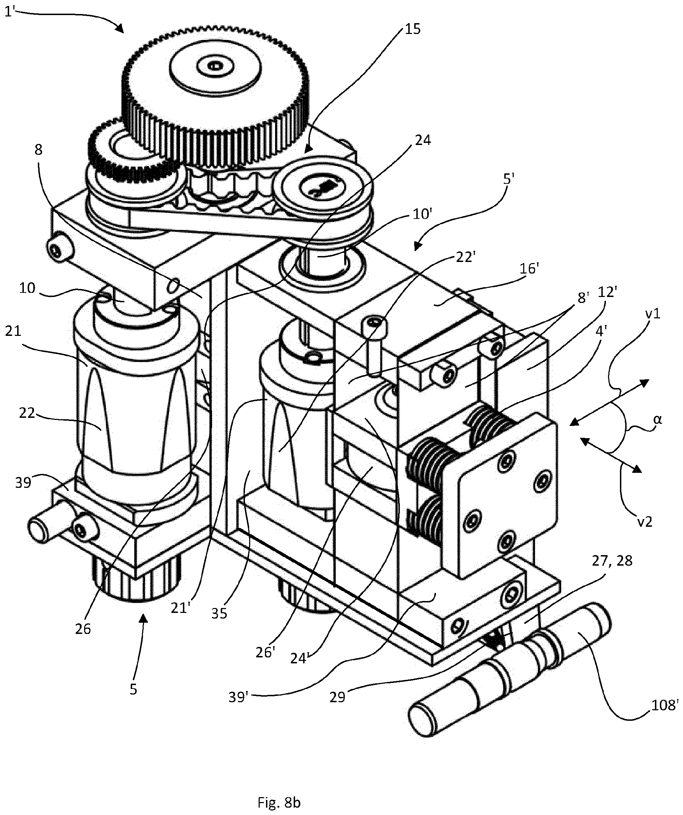

Such an embodiment comprising two oscillation mechanisms is shown in figures 8a and 8b. The tool holding device 1' according to figure 8a comprises a housing 2' where two pulse spindles 10, 10' and therewith two oscillation mechanisms 5, 5' are embedded so that oscillation in two directions can be provided. The angle between the two directions is thereby preferably 90° so that cosines and sinus calculations can be used. Other angles between the two oscillation directions may however be possible. Figure 8a further illustrates the tool 28 and the cutting insert 29 as well as the blank 108' for illustrative purposes.

Providing a tool holding device 1' with two oscillation directions may further be advantageous if surfaces on the blank 108' need to be produced that have a changing inclination and/or surfaces that are not oriented perpendicular or parallel to the feed direction.

Turning now to figure 8b, which illustrates the same embodiment as figure 8a but with the housing 2' removed for illustrative purposes. Details of the tool holding device 1' according to figure 8b will now be explained. The tool holding device 1' comprises a first oscillation mechanism 5 and a second oscillation mechanism 5'. The second oscillation mechanism 5' is integrated in the first oscillation mechanism 5 so that the two oscillation mechanisms 5, 5' generate a first vibration direction v1 in one direction and a second vibration direction v2 that is oriented at an angle α to the first vibration direction v2. Each of the first - and second oscillation mechanism 5, 5' comprise a pulse spindle 10, 10' having a lateral surface 21 comprising at least one irregularity 22 in the form of a milled or inclined surface for the generation of oscillation and pulses, respectively, an oscillator bearing 26, 26' that is designed to contact the lateral surface 21, motion links 8 for holding the contact element or oscillation bearing 26 moveable in a specific direction, which direction corresponds the first vibration direction v1 and the second vibration direction v2, respectively. Each of the first - and second oscillation mechanism 5, 5' further comprise at least one elastic element 4, 4' that pre-tensions the respective oscillator bearing 26, 26' towards the lateral surface 21 for generating pulses when the respective pulse spindle 10, 10' is rotating. The rotation of the pulse spindle 10 of the first oscillation mechanism 5 is synchronized with the pulse spindle 10' of the second oscillation mechanism 5' via a gearing 15', embodied as a belt drive. The gearing 15 can also be embodied as a purely electric connection, a gearing using cogwheels, a magnetic rotational force transfer and so on.

The tool holder 12 is connected to the first part 24' of the second oscillation mechanism 5' and holds the tool 28 with the cutting insert 29. The tool holder 12 may be pivotable versus the first part 24 of the first oscillation mechanism 5.

The second oscillation mechanism 5' is connected to the first part 24 of the first oscillation mechanism 5, via a support structure 35 that is coupled to the first part 24. The first part 24 comprises a casing for holding the oscillator bearing 26, whereby the support structure 35 is connected to the casing of the first part 24 so that the vibrations can be optimally transferred from the first oscillation mechanism 5 to the second oscillation mechanism 5'. The first part 24' of the second oscillation mechanism 5' is better visible and there the casing holds the oscillator bearing 26'. It is to be noted that the support structure 35 is freely movable and only connected to the first part 24 of the first oscillation mechanism 5.

It is to be noted that longitudinal directions of the pulse spindles 10, 10' of the embodiment shown in figures 8a and 8b are oriented parallel with one another. This may be feasible for the application at hand but does not necessarily need to be that case. Further, each of the lateral surfaces 21, 21' of the first oscillation mechanism 5 and the second oscillation mechanism 5' can be moved along the corresponding pulse spindle 10, 10' independently of one another in order to change amplitude for each of the first and second oscillation direction v1, v2 independently of one another.

Each of the first - and second oscillation mechanism 5, 5' may further comprise a base 39, 39' that holds the pulse spindle 10, 10' and at least a part of the motion links. The base 39, 39' may be arranged a lower end of the first- and second oscillation mechanism. The pulse spindle(s) 10, 10' may further be embedded in the frame 16, 16'. The base 39, 39' may be provided for stiffness purposes and it may also be embodied in any embodiment shown herein.

In the tool holding devices illustrated herein various motors and servomotors may be installed so that the turning process can be automatically or at least remotely controlled. The tool holding device may also be coupled to a drive shaft for driven tools of the lathe.

Various features are described herein as being present in "some embodiments" in "another embodiment" or "still another embodiment" and so on. Such features are not mandatory and may not be present in all embodiments. Embodiments of the invention may include zero, any one or any combination of two or more of such features. This is limited only to the extent that certain ones of such features are incompatible with other ones of such features in the sense that it would be impossible for a person of ordinary skill in the art to construct a practical embodiment that combines such incompatible features. Consequently, the description that "some embodiments" "another embodiment" or "still another embodiment" and so on possess feature A and "some embodiments" possess feature B should be interpreted as an express indication that the inventors also contemplate embodiments which combine features A and B (unless the description states otherwise or features A and B are fundamentally incompatible).

## Claims

1. A tool holding device (1) for a turning machine, the tool holding device comprising a housing (2) and a first oscillation mechanism (5), the first oscillation mechanism (5) comprising:
- a tool holder (12) for holding a tool (28) said tool holder (12) comprising an oscillator bearing (26),
- at least one elastic element (4) abutting the tool holder (12) with one end and the housing (2) with the other end,
- a motion link (8) being connected to the housing (2) and the tool holder (12), the motion link (8) being used to embed the tool holder (12) in a movable manner,
- a pulse spindle (10) being embedded in the housing (2), the pulse spindle (10) comprising a lateral surface (21), which is substantially cylindrical and interrupted by at least one irregularity (22), wherein
the at least one elastic element (4) is arranged for pushing the tool holder (12) towards the lateral surface (21) of the pulse spindle (10), the oscillator bearing (26) thereby abutting the lateral surface (21), so that a rotation of the pulse spindle (10) generates an oscillation in the tool holder (12) due to the irregularity (22) in the lateral surface (21) of the pulse spindle (10).

2. The tool holding device (1) according to claim 1, wherein the tool holder (12) is designed to hold and fixate the tool (28) in various orientations so that a counter cutting force (RF') that is generated when the tool (28) is fed in a feed direction (FD) due to a cutting force (RF) resulting from the blank (108, 108'), is absorbed by the pulse spindle (10).

3. The tool holding device (1) according to claim 1 or 2, wherein the pulse spindle (10) is mounted in a displaceable manner in the housing (2) so that it can be displaced along its longitudinal axis (a) and wherein the at least one irregularity (22) is a surface (22) that is conically shaped as seen along a longitudinal axis (a) of the pulse spindle (10), so that a point of contact between the pulse spindle (10) and the oscillator bearing (26) can be chosen along the longitudinal axis (a) and that there with the amplitude of the oscillations can be varied and adjusted.

4. The tool holding device (1) according to any of the previous claims, wherein the tool holder (12) is embedded in the housing (2) by preferably two motion links (8) and more preferably four motion links (8).

5. The tool holding device (1) according to any of the previous claims wherein the motion link(s) (8) are membranes that can oscillate.

6. The tool holding device (1) according to any of the previous claims, wherein the pulse spindle (10) comprises one or more irregularities (22) on the lateral surface (21).

7. The tool holding device (1) according to any of the previous claims, wherein a part of the lateral surface (21) is free from any irregularity (22) and is thus harmonic and cylindrical along its circumference, so that an oscillation with zero amplitude can be chosen.

8. The tool holding device (1) according to any of the previous claims, wherein the tool holder (12) comprises a first part (24) and a second part (27), the first part (24) comprising the oscillator bearing (26) and wherein the motion link(s) (8) are connected to the first part (24) and wherein the second part (27) is a tool holding part comprising the tool holder (12) and the tool (28) and wherein the first part (24) and the second part (27) are pivotable in relation to one another.

9. The tool holding device (1) according to the previous claim, wherein the second part (27) comprises an adjusting mechanism (32) for holding and adjusting the tool (28).

10. The tool holding device (1) according to any of the previous claims, further comprising a motor, wherein the pulse spindle (10) is driven by the motor.

11. The tool holding device (1) according to any of the previous claims 1 to 10, further comprising a rotation transfer so that the pulse spindle (10) can be driven of a rotation adapter of the turning machine.

12. The tool holding device (1) according to any of the previous claims, further comprising a second oscillation mechanism (5'), the second oscillation mechanism (5') comprising:
- a tool holder (12') for holding a tool (28) said tool holder (12') comprising an oscillator bearing (26'),
- at least one elastic element (4') abutting the tool holder (12') with one end and the housing (2) with the other end,
- a motion link (8') being connected to the housing (2') and the tool holder (12'), the motion link (8) being used to embed the tool holder (12') in a movable manner,
- a pulse spindle (10') being embedded in the housing (2'), the pulse spindle (10') comprising a lateral surface (21'), which is substantially cylindrical and interrupted by at least one irregularity (22'), whereby
the at least one elastic element (4') is arranged for pushing the tool holder (12') towards the lateral surface (21') of the pulse spindle (10'), the oscillator bearing (26') thereby abutting the lateral surface (21'), so that a rotation of the pulse spindle (10') generates an oscillation in the tool holder (12') due to the irregularity (22') in the lateral surface (21') of the pulse spindle (10'), wherein the second oscillation mechanism (5') is connected to the tool holder (12) of the first oscillation mechanism (5) so that a first vibration direction (v1) generated by the first oscillation mechanism (5) is oriented at an angle (α) to a second vibration direction (v2) generated by the second oscillation mechanism (5').

13. The tool holding device according to the previous claim, further comprising a support structure (35), wherein each oscillator bearing (26, 26') of the first oscillation mechanism (5) and second oscillation mechanism (5') is embedded in a separate casing that is part of a corresponding tool holder (12, 12'), whereby each casing is connected to the motion link (8, 8') of the first - and second oscillation mechanism (5, 5'), respectively, wherein the support structure (35) is connected to the casing of the first oscillation mechanism (5) and wherein the second oscillation mechanism (5') is attached to the support structure (35).

14. The tool holding device (1) according to claim 12 or 13, wherein longitudinal directions of the pulse spindles (10, 10') of the first oscillation mechanism (5) and second oscillation mechanism (5') are oriented parallel to one another.

15. The tool holding device (1) according to any of claims 12 to 14, wherein the angle (α) between the first vibration direction (v1) and the second vibration direction (v2) is chosen to be 90 degrees and thus perpendicular.

16. The tool holding device (1) according to any of the claims 12 to 15, further comprising a gearing (15), wherein the pulse spindles (10, 10') of the first oscillation mechanism (5) and the second oscillation mechanism (5'), respectively, are interconnected with one another via the gearing (15).

17. A lathe or turning machine comprising a tool holding device according to any of claims 1 to 16.
